# EUROPÄISCHE PATENTSCHRIFT

(11) **EP 3 835 626 B1**
(45) Veröffentlichungstag und Bekanntmachung des Hinweises auf die Patenterteilung: **24.04.2024**
(21) Anmeldenummer: 20212112.5
(22) Anmeldetag: 07.12.2020
(51) Int. Cl.: F16H 63/18, F16H 63/06, F16H 61/32, H02K 29/00

(54) **WECHSELGETRIEBE MIT ELEKTROMOTORISCH ANGETRIEBENER SCHALTWALZE UND VERFAHREN ZUM WECHSELN ZWISCHEN MEHREREN ÜBERSETZUNGSSTUFEN**
VARIABLE TRANSMISSION WITH ELECTRIC MOTOR DRIVEN SHIFT DRUM AND METHOD FOR CHANGING BETWEEN SEVERAL GEAR RATIOS
MÉCANISME DE CHANGEMENT DE VITESSE POURVU DE CYLINDRE DE COMMUTATION À MOTEUR ÉLECTRIQUE ET PROCÉDÉ DE CHANGEMENT ENTRE PLUSIEURS ÉTAGES DE TRANSMISSION

(30) Priorität: 13.12.2019 DE 102019134396
(43) Veröffentlichungstag der Anmeldung: 16.06.2021
(73) Patentinhaber: MEGA-Line RACING ELECTRONIC GmbH, 93342 Saal a. d. Donau (DE)
(72) Erfinder: GASSNER, Erwin, 93342 Saal a. d. Donau (DE)
(74) Vertreter: Benninger, Johannes

(56) Entgegenhaltungen:
- CN-Y- 2 558 153
- DE-A1- 10 051 373
- DE-A1-102019 106 814
- DE-U1- 20 302 174
- GB-A- 2 377 733
- GB-A- 2 377 740
- KR-B1- 101 420 699
- US-A1- 2013 113 407
- US-A1- 2019 277 400

## Beschreibung

Die vorliegende Erfindung betrifft ein drehmoment- und/oder drehzahlwandelndes Wechselgetriebe mit einer elektromotorisch angetriebenen Schaltwalze sowie ein Verfahren zum Wechseln zwischen mindestens zwei Übersetzungsstufen eines drehmoment- und/oder drehzahlwandelnden Wechselgetriebes.

Bei herkömmlichen Fahrzeugantrieben wird die Antriebsleistung einer Brennkraftmaschine auf mechanischem Wege auf wenigstens eine angetriebene Achse des Fahrzeugs übertragen. Da die typischen Drehzahlbereiche, in denen Brennkraftmaschinen ökonomisch und mit ausreichendem Drehmoment und ausreichender Leistung betrieben werden, nicht zu den am Achsantrieb benötigten Umdrehungsgeschwindigkeiten passen, sind zwischengeschaltete Getriebeeinheiten notwendig, die sowohl als Drehmomentwandler als auch als Drehzahlwandler fungieren.

Solche Getriebe können als manuell schaltbare Wechselgetriebe ausgebildet sein, bei denen Übersetzungswechsel unter gleichzeitiger Trennung eines Kraftschlusses, was üblicherweise mit einer bedarfsweise von einem Fahrzeugführer betätigbaren Reibungskupplung erfolgen kann, durchgeführt werden. Neben sog. automatischen Getrieben, die bspw. als Planetengetriebe ausgeführt sein können, gibt es zahlreiche weitere Getriebebauarten, bei denen die Übersetzungswechsel durch manuelle Vorgaben erfolgen.

Manuell schaltbare Wechselgetriebe weisen oftmals Zahnradsätze auf, deren jeweiliger Eingriff mittels Schiebemuffen gesteuert werden kann, die auf im Getriebegehäuse gelagerten Wellen verschoben werden können, um solchermaßen verschiedene Zahnradpaarungen in Verzahnungseingriff bringen zu können. Die auf den Wellen gelagerten und dort verschiebbaren Schiebemuffen werden häufig mittels drehbarer Schaltwalzen betätigt, wobei die Schaltwalzen über Steuerkurven mit Schaltgabeln oder Schaltstiften zusammenwirken, die wiederum mit den Schiebemuffen zusammenwirken. Eine Drehung der Schaltwalze um einen definierten Drehwinkel, der bspw. auch weniger als 90° betragen kann, bewirkt eine Verschiebung oder Winkelverstellung der mit den Schiebemuffen gekoppelten Schaltgabeln oder Schaltstiften, was wiederum eine Aktivierung oder Deaktivierung einer der Zahnradpaarungen und damit das Einlegen oder Auslegen einer Übersetzungsstufe des Wechselgetriebes bewirkt.

Eine besonders kompakte Bauform derartiger manuell betätigbarer Wechselgetriebe ist durch ein sog. sequentiell arbeitendes Getriebe gebildet, bei dem durch einen Einsatz geeigneter Sensorik und geeigneter Aktoren auch teilautomatisierte oder vollautomatische Schalt- und Übersetzungswechselvorgänge ermöglicht sind.

Die DE 10 2010 013 962 A1 beschreibt ein sequentielles Getriebeschaltsystem mit einer Steuerung für eine motorisch betriebene Getriebeschaltwalze. Das Getriebe umfasst mindestens zwei Getriebesätze, die wahlweise kuppelbar sind, sowie eine drehbare Schaltwalze zur Auswahl der einzukuppelnden Getriebesätze, wodurch eine Eingangswelle des Getriebes kraft- und drehmomentschlüssig mit einer Ausgangswelle des Getriebes verbunden ist. Die Schaltwalze wird von einem Steuerungsmotor angetrieben. Ein Drehmomentsensor erfasst ein vom Steuerungsmotor auf die Schaltwalze ausgeübtes Antriebsmoment. Der Steuerungsmotor wird auf Grundlage der vom Drehmomentsensor erfassten Drehmomentwerte angesteuert. Solchermaßen wird das Kuppeln des Getriebesatzes gesteuert.

Ein Steuerungssystem mit einem Stellglied zur Positionsveränderung einer Schaltwalze eines Zahnradwechselgetriebes ist zudem aus der WO 2004/65825 A1 bekannt. Ein Positionsregler sorgt hierbei für eine Regelung der Position der Schaltwalze bei einem Wechsel von einem Ursprungsgang in einen Zielgang.

Aus der DE 10 2019 106 814 A1 ist ein Fahrzeugmotor mit einer Getriebevorrichtung bekannt, bei welcher das Getriebe durch einen elektrischen Gleichstrommotor betätigt wird, welcher über ein Untersetzungsgetriebe mit dem Getriebe verbunden ist. Diese Ausführung ermöglicht einen kompakten Aufbau der Getriebevorrichtung aufgrund reduzierter Zahl der verwendeten Bauteile bei gleichzeitiger Erhöhung der Schaltgeschwindigkeit.

In der US 2019/277 400 A1 ist ein motorisiertes Zweirad beschrieben, bei welchem der elektromotorisch betätigte Schaltwalzenantrieb an einer Vorderfläche des Kurbelgehäuses unterhalb des Zylinderblocks angebracht ist; Schaltwalze und Schaltwalzenantrieb sind dabei über einen Getriebezug zur Reduzierung der Antriebskraft des Elektromotors miteinander verbunden. Die besondere Anordnung soll eine ausreichende Kühlung des Antriebsmotors des Zweirads sicherstellen und gleichzeitig dafür sorgen, dass der Schaltwalzenantrieb trotz baulicher Nähe zum Antriebsmotor ebenfalls ausreichend gekühlt wird.

Darüber hinaus beschreibt die EP 1 199 500 B1 eine elektromotorisch angetriebene Schaltwalze eines Wechselgetriebes, wobei der die Schaltwalze antreibende Elektromotor einen gehäuselosen Stator und einen Rotor aufweist, die im Interesse einer kompakten Bauweise zwischen der Schaltwalze und einer diese lagernden Achse angeordnet sind.

Ein vorrangiges Ziel der Erfindung liegt darin, ein Wechselgetriebe mit einer elektromotorisch angetriebenen Schaltwalze zur Verfügung zu stellen, bei dem der Schaltwalzenantrieb besonders kompakt und mit hoher Leistungsdichte ausgeführt ist. Außerdem besteht ein Ziel der Erfindung darin, ein Verfahren zur Verfügung zu stellen, das einen möglichst ökonomischen und schnell durchführbaren Wechsel von Übersetzungsstufen eines drehmoment- und/oder drehzahlwandelnden Wechselgetriebes erlaubt.

Diese Ziele werden durch ein Wechselgetriebe mit den Merkmalen des unabhängigen Anspruchs 1 sowie durch ein Verfahren mit den Merkmalen des unabhängigen Verfahrensanspruchs 10 erreicht. Weitere vorteilhafte Ausgestaltungen werden durch die jeweiligen abhängigen Ansprüche beschrieben.

Zur Erreichung zumindest einiger der oben genannten Ziele schlägt die vorliegende Erfindung ein drehmoment- und/oder drehzahlwandelndes Wechselgetriebe mit einer Eingangswelle und einer Ausgangswelle sowie mindestens zwei Übersetzungsstufen mit den Merkmalen des unabhängigen Anspruchs 1 vor. Das Wechselgetriebe weist weiterhin wenigstens zwei wechselbaren Zahnradpaarungen auf, wobei die Zahnräder dieser wenigstens zwei wechselbaren Zahnradpaarungen jeweils auf Wellen gelagert sind und/oder auf oder mit diesen in einem Getriebegehäuse oder anderweitig gelagerten Wellen rotieren. Typischerweise können diese Zahnräder oder Zahnradpaarungen dadurch aktiviert oder in Eingriff gebracht werden, indem Klauenringe in axialer Richtung auf den Wellen verschoben werden, um je nach gewünschter Übersetzungsstufe unterschiedliche Zahnradpaarungen in einen Verzahnungseingriff bringen zu können.

Weiterhin umfasst das Wechselgetriebe geeignete Schaltelemente, bspw. in Form von beweglichen Schaltgabeln, Schaltstiften o. dgl., die auf Schiebemuffen wirken, die mit den Zahnradpaarungen bzw. den Zahnrädern der Zahnradpaarungen in Verbindung stehen und diese wechseln können, womit insbesondere ein axiales Verschieben der mit den Zahnrädern in Eingriff bringbaren Klauenringe gemeint ist, wobei die Klauenringe dafür sorgen, dass die jeweiligen Zahnräder oder Zahnradpaarungen in Eingriff kommen, die die jeweils anzuwählende Übersetzungsstufe liefern.

Außerdem stehen die Schaltelemente in Eingriff und/oder befinden sich in Wirkverbindung mit einer in definierte Winkellagen bringbaren und zwischen diesen Winkellagen verdrehbaren Schaltwalze, wobei diese Schaltwalze über einen elektromotorischen Direktantrieb verfügt, der die Schaltwalze drehen und in die jeweiligen definierten Winkellagen bringen kann. Erfindungsgemäß ist der elektromotorische Direktantrieb der Schaltwalze durch einen bürstenlosen Gleichstrommotor gebildet.

Ein solcher Antriebsmotor, der aufgrund seines spezifischen Einsatzzweckes der Gattung der sog. Langsamläufer zuzuordnen ist, kann auch als Torquemotor bezeichnet werden. Solche Torquemotoren weisen bei vergleichsweise geringem Drehzahlniveau relativ hohe Drehmomente auf.

Eine sinnvolle Ausführungsvariante des erfindungsgemäßen Wechselgetriebes kann vorsehen, dass der mit der Schaltwalze gekoppelte elektromotorische Direktantrieb modular steckbar und/oder schnellwechselbar und/oder werkzeuglos austauschbar ist.

Der bürstenlose Motor ermöglicht eine hohe Leistungsdichte und damit eine besonders kompakte Bauform, so dass auf jegliche Getriebeübersetzungsstufen zwischen Schaltwalze und Motor verzichtet werden kann. Außerdem bietet ein solch kompakter Motor hoher Leistungsdichte vielfältige Vorteile hinsichtlich des Packaging, denn es besteht ein hoher Grad an Variabilität beim Einbau des Motors, wahlweise innerhalb des Getriebegehäuses, so dass eine Wellendurchführung für den Antrieb der Schaltwalze entfallen kann.

Da außerdem solche bürstenlosen Motoren sehr präzise steuerbar sind und als Schrittmotoren eingesetzt werden können, kann ggf. auf eine Sensorik zur Erfassung eines aktuellen Drehwinkels der Schaltwalze verzichtet werden. Außerdem kann das erfindungsgemäße Wechselgetriebe ohne sog. Gangpositionssensor betrieben werden, da ein solcher entweder im elektrischen Antriebsmotor für die Schaltwalze bereits vorhanden ist oder aufgrund dessen spezifischer Eigenschaften substituiert werden kann.

Wahlweise kann bei dem erfindungsgemäßen Wechselgetriebe der elektromotorische Direktantrieb der Schaltwalze durch einen sog. Innenläufer-Motor gebildet sein. Hierbei befindet sich der Läufer innen, während der den Läufer umschließende Stator außen angeordnet ist. Eine sinnvolle Bauausführung eines solchen Innenläufer-Motors, der insbesondere durch einen Torquemotor gebildet sein kann, kann bspw. mit weniger Nuten als Polen ausgestattet sein, was die unerwünschten Rastungseffekte reduzieren kann. Eine Variante mit bspw. zwölf Nuten und vierzehn Polen kann diesen Zweck der sehr gering ausgeprägten Rastung erfüllen.

Bei dem erfindungsgemäßen Wechselgetriebe ist der elektromotorische Direktantrieb der Schaltwalze durch einen sog. Außenläufer-Motor gebildet. Hierbei befindet sich der Stator innen, während der den Stator umschließende Läufer außen angeordnet ist. Eine sinnvolle Bauausführung eines solchen Außenläufer-Motors, der durch einen Torquemotor gebildet ist, kann bspw. mit weniger Nuten als Polen ausgestattet sein, was die unerwünschten
Rastungseffekte reduzieren kann. Eine Variante mit bspw. zwölf Nuten und vierzehn Polen kann diesen Zweck der sehr gering ausgeprägten Rastung erfüllen.

Weiterhin kann es von Vorteil sein, bei einer Ausführungsvariante des erfindungsgemäßen Wechselgetriebes Leerlaufstellungen zwischen den Gängen vorzusehen, was insbesondere dadurch realisiert werden kann, dass der elektromotorische Direktantrieb der Schaltwalze jeweils Leerlaufstellungen zwischen zwei benachbarten Schaltstufen vorsieht oder vorsehen kann, insbesondere durch seine Ansteuerbarkeit.

In diesem Zusammenhang ist es sinnvoll bzw. notwendig, den elektromotorischen Direktantrieb der Schaltwalze elektronisch anzusteuern, was bspw. über ein Bussystem wie etwa einen CAN-Bus o. dgl. System erfolgen kann. Eine solche Ansteuerung hat neben der präzisen Steuerbarkeit den weiteren Vorteil, dass die Ansteuerungselektronik das Verhalten des Elektromotors beeinflussen oder definieren kann. So kann bspw. mittels einer Strombegrenzung das Antriebsmoment des Motors begrenzt oder innerhalb gewünschter Grenzen vorgegeben werden.

Die oben erwähnten bürstenlosen Motoren oder Torquemotoren weisen nicht nur generell eine hohe Leistungsdichte auf, sondern benötigen gegenüber bisher verwendeten Antriebsmotoren eine relativ geringe Versorgungsleistung. Bei einer typischen Stromaufnahme von weniger als einem Ampere lassen sich nicht nur direkt Gewicht und Bauraum sparen, sondern auch indirekt aufgrund der geringeren Leitungsquerschnitte der elektrischen Zuleitungen, wodurch die mit dem Getriebe in elektrischer Antriebsverbindung stehenden Kabelbaumabschnitte ebenfalls leichter und kompakter ausfallen können.

Zur Erreichung zumindest einiger der oben genannten Ziele schlägt die Erfindung neben dem oben in verschiedenen Ausführungsvarianten erläuterten Wechselgetriebe ein Verfahren zum Wechseln zwischen mindestens zwei Übersetzungsstufen eines drehmoment- und/oder drehzahlwandelnden Wechselgetriebes vor, das über eine Eingangswelle und eine Ausgangswelle sowie mindestens zwei Übersetzungsstufen verfügt, denen jeweils wenigstens eine wechselbare Zahnradpaarung zugeordnet ist.

Hierbei ist vorgesehen, dass jeweils Schaltelemente auf Schiebemuffen wirken, die mit den Zahnradpaarungen in Verbindung stehen und diese wechseln können. Außerdem ist vorgesehen, dass die Schaltelemente in Eingriff mit einer zwischen definierten Winkellagen verdrehbaren Schaltwalze stehen. Diese Schaltwalze verfügt über einen, durch einen bürstenlosen Gleichstrommotor gebildeten elektromotorischen Direktantrieb, der die Schaltwalze zum Zwecke des Wechsels zwischen den wenigstens zwei Übersetzungsstufen drehen und in die jeweiligen definierten Winkellagen bringen kann.

Das Verfahren kann außerdem vorsehen, dass der elektromotorische Direktantrieb der Schaltwalze zwischen zwei benachbarten Schaltstufen jeweils in Leerlaufstellungen gebracht werden kann.

Außerdem ist vorgesehen, dass der elektromotorische Direktantrieb der Schaltwalze elektronisch gesteuert wird.

Es sei an dieser Stelle ausdrücklich erwähnt, dass alle Aspekte und Ausführungsvarianten, die im Zusammenhang mit dem erfindungsgemäßen Wechselgetriebe erläutert wurden, gleichermaßen Teilaspekte des erfindungsgemäßen Verfahrens zum Wechseln zwischen mindestens zwei Übersetzungsstufen des drehmoment- und/oder drehzahlwandelnden Wechselgetriebes betreffen oder bilden können. Wenn daher an einer Stelle bei der Beschreibung oder auch bei den Anspruchsdefinitionen zum erfindungsgemäßen Wechselgetriebe von bestimmten Aspekten und/oder Zusammenhängen und/oder Wirkungen die Rede ist, so gilt dies gleichermaßen für das erfindungsgemäße Verfahren.

In umgekehrter Weise gilt dasselbe, so dass auch alle Aspekte und Ausführungsvarianten, die im Zusammenhang mit dem erfindungsgemäßen Verfahren zum Wechseln zwischen mindestens zwei Übersetzungsstufen eines drehmoment- und/oder drehzahlwandelnden Wechselgetriebes erläutert wurden, gleichermaßen Teilaspekte des erfindungsgemäßen Wechselgetriebes betreffen oder sein können. Wenn daher an einer Stelle bei der Beschreibung oder auch bei den Anspruchsdefinitionen zum erfindungsgemäßen Verfahren von bestimmten Aspekten und/oder Zusammenhängen und/oder Wirkungen die Rede ist, so gilt dies gleichermaßen für das erfindungsgemäße Wechselgetriebe.

Im Folgenden sollen Ausführungsbeispiele die Erfindung und ihre Vorteile anhand der beigefügten Figuren näher erläutern. Die Größenverhältnisse der einzelnen Elemente zueinander in den Figuren entsprechen nicht immer den realen Größenverhältnissen, da einige Formen vereinfacht und andere Formen zur besseren Veranschaulichung vergrößert im Verhältnis zu anderen Elementen dargestellt sind.
Fig. 1 zeigt eine schematische Perspektivansicht einer Lager- und Anordnungskonfiguration einer drehbaren Schaltwalze für ein Wechselgetriebe und eines mit der Schaltwalze gekoppelten elektromotorischen Direktantriebes.
Fig. 2A zeigt eine schematische Frontansicht auf einen Lagerflansch und die durch diesen hindurchgeführte Abtriebswelle des Schaltwalzenantriebes.
Fig. 2B zeigt eine schematische Seitenansicht des Schaltwalzenantriebes gemäß Fig. 2A.
Fig. 2C zeigt eine schematische Perspektivansicht des Schaltwalzenantriebes von schräg vorne gemäß Fig. 2A und Fig. 2B.
Fig. 2D zeigt eine schematische Perspektivansicht des Schaltwalzenantriebes von schräg hinten gemäß Fig. 2A, Fig. 2B und Fig. 2C.
Fig. 2E zeigt einen schematischen Längsschnitt durch den Schaltwalzenantrieb entlang der Schnittlinie A-A der Fig. 2A.
Fig. 3A zeigt eine schematische Perspektivansicht von Motorkomponenten des ohne umschließendes Motorgehäuse dargestellten Schaltwalzenantriebes.
Fig. 3B zeigt eine schematische Seitenansicht der Motorkomponenten des Schaltwalzenantriebes gemäß Fig. 3A.
Fig. 3C zeigt einzelne Motorkomponenten des Schaltwalzenantriebs gemäß Fig. 3A und Fig. 3B in einem schematischen Längsschnitt.

Für gleiche oder gleich wirkende Elemente der Erfindung werden identische Bezugszeichen verwendet. Ferner werden der Übersicht halber nur Bezugszeichen in den einzelnen Figuren dargestellt, die für die Beschreibung der jeweiligen Figur erforderlich sind. Die dargestellten Ausführungsformen stellen lediglich Beispiele dar, wie das erfindungsgemäße Wechselgetriebe mitsamt dem elektrischen Direktantrieb ausgestaltet sein kann und stellen keine abschließende Begrenzung dar.

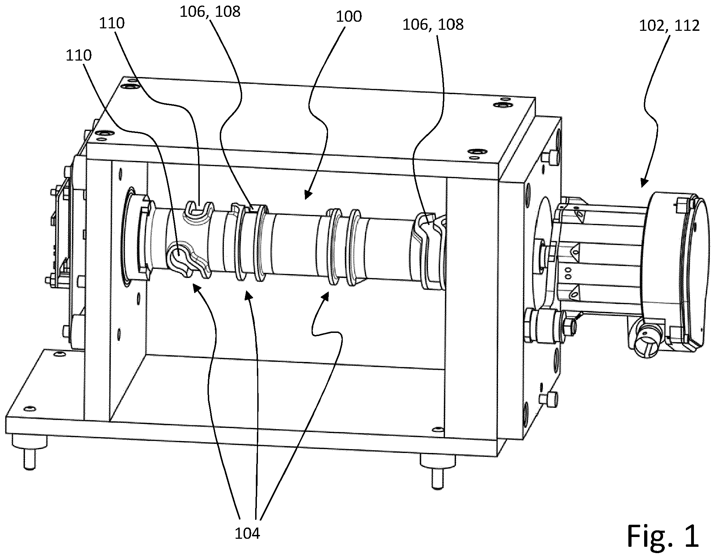

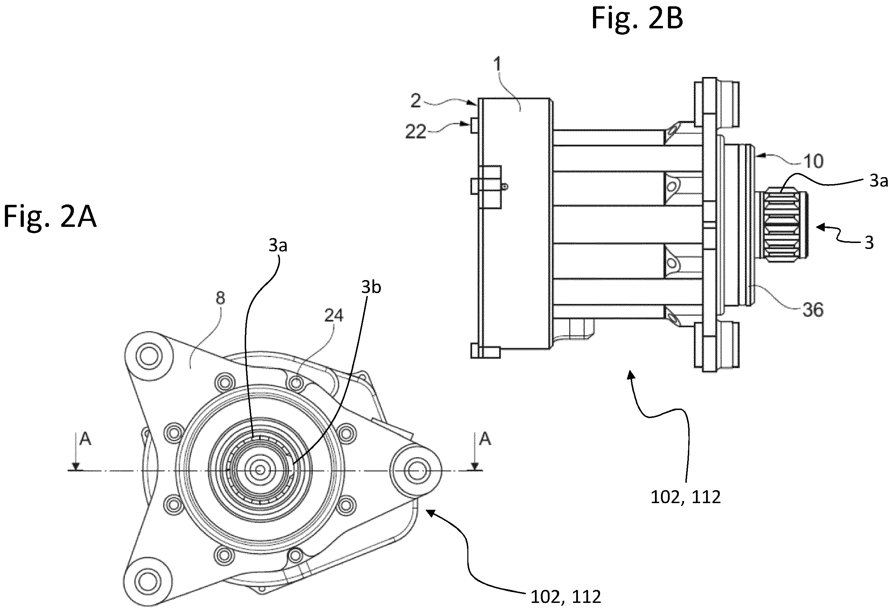

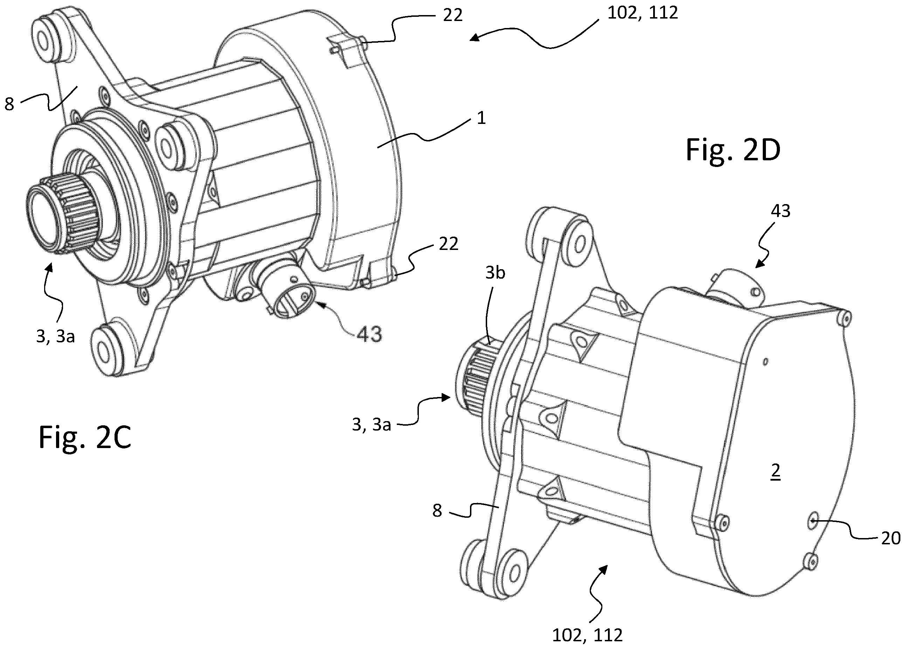

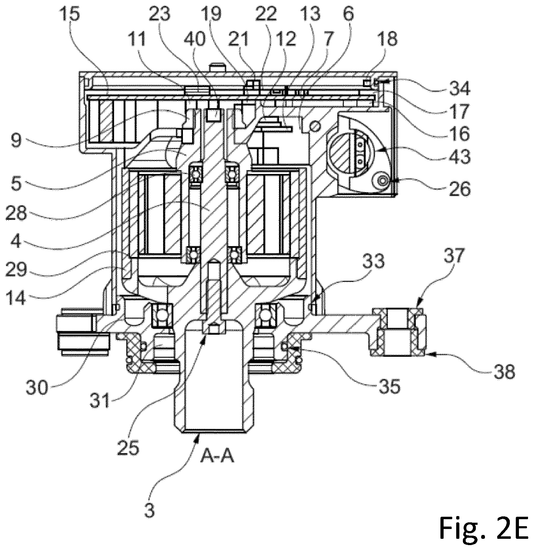

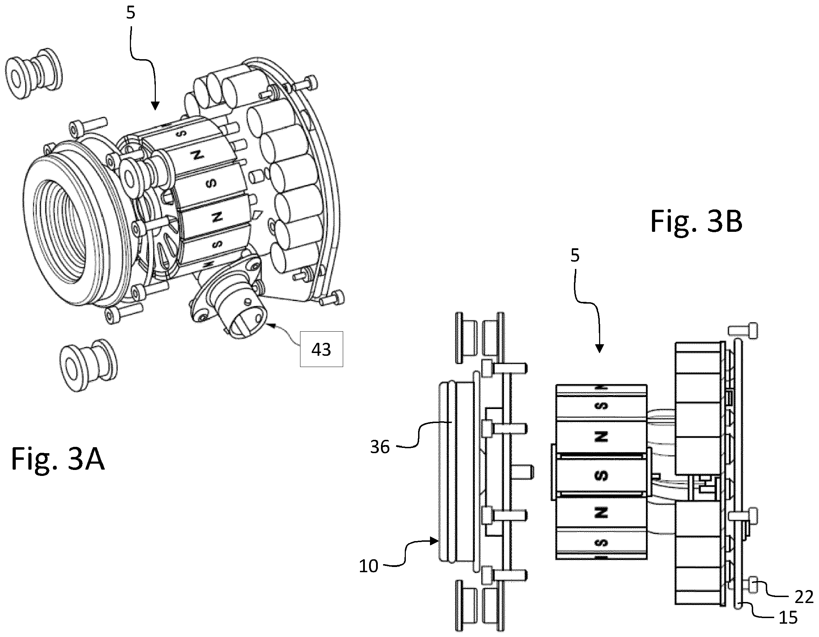

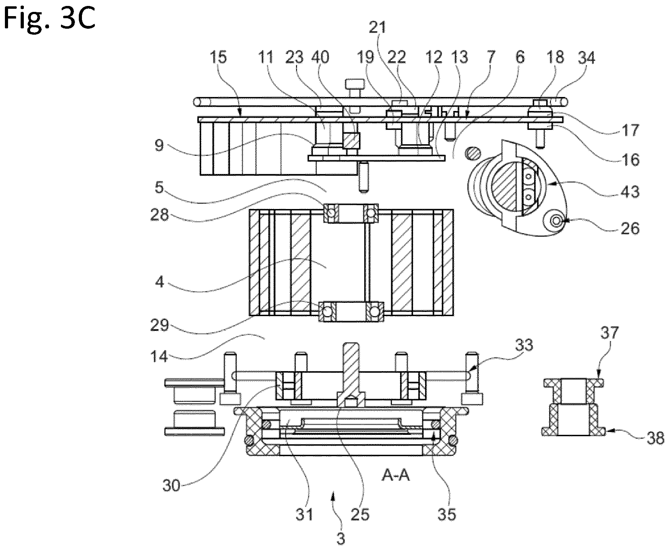

Die schematische Perspektivansicht der Fig. 1 verdeutlicht eine Lager- und Anordnungskonfiguration einer drehbaren Schaltwalze 100 für eine Ausführungsvariante eines hier nicht dargestellten Wechselgetriebes und eines mit der Schaltwalze 100 gekoppelten elektromotorischen Direktantriebes 102. Details zum Aufbau und zur möglichen Gestaltung dieses elektromotorischen Direktantriebs 102 für die Schaltwalze 100 finden sich in den Figuren 2A, 2B, 2C, 2D, 2E, 3A, 3B und 3C, die weiter unten noch näher erläutert werden.

Ein hier nicht dargestellter Teil der vorliegenden Erfindung ist ein drehmoment- und/oder drehzahlwandelndes Wechselgetriebe mit einer Eingangswelle, die bspw. mit einem in vergleichsweise hohem Drehzahlniveau und großem Drehzahlband betreibbaren Verbrennungsmotor gekoppelt ist, und mit einer Ausgangswelle, die bspw. mit einem Achs- oder Radantrieb eines Fahrzeuges gekoppelt ist, der ein deutlich geringeres Drehzahlniveau als der Verbrennungsmotor, aber höhere Drehmomente als dieser benötigt. Gleiches gilt grundsätzlich auch für elektromotorische Fahrzeugantriebe, weil auch bei diesen Antriebsmotoren normalerweise mindestens zwei Übersetzungsstufen sinnvoll sind, die gleichermaßen mittels eines mechanischen Wechselgetriebes zur Drehzahl- und Drehmomentwandlung zur Verfügung gestellt werden können.

Um die Drehzahl- und Drehmomentwandlung zwischen dem Verbrennungs- oder Elektromotor und dem Achs- oder Radantrieb des Fahrzeuges zu ermöglichen, weist das hier nicht dargestellte Wechselgetriebe mindestens zwei Übersetzungsstufen mit wenigstens zwei wechselbaren Zahnradpaarungen auf, wobei die Zahnräder dieser wenigstens zwei wechselbaren Zahnradpaarungen jeweils auf Wellen gelagert sind und/oder auf oder mit diesen in einem Getriebegehäuse oder anderweitig gelagerten Wellen rotieren. Typischerweise sind diesen Zahnrädern jeweils rotierbare und auf den Wellen gelagerte Klauenringe zugeordnet, die in axialer Richtung auf den Wellen verschoben werden können, um unter Verwendung der nachfolgend beschriebenen Schaltelemente je nach gewünschter Übersetzungsstufe unterschiedliche Zahnradpaarungen in einen Verzahnungseingriff bringen zu können.

Um die gewünschten Verzahnungseingriffe realisieren zu können, umfasst das Wechselgetriebe geeignete Schaltelemente, bspw. in Form von beweglichen Schaltgabeln, Schaltstiften o. dgl., die in aller Regel auf Schiebemuffen wirken, die mit den Klauenringen der Zahnradpaarungen bzw. den Zahnrädern der Zahnradpaarungen in Verbindung stehen und diese wechseln können, womit insbesondere ein axiales Verschieben der den Zahnrädern auf den lagernden Wellen zugeordneten Klauenringen gemeint sein kann.

Die genannten Schaltelemente, die bspw. durch bewegliche oder verschiebbare oder schwenkbare Schaltgabeln oder Schaltstifte gebildet sein können, sind von der dreh- oder schwenkbaren Schaltwalze 100 geführt und stehen deshalb mit definiert geformten Kulissenführungen 104 in Eingriff und befinden sich auf diese Weise in Wirkverbindung mit der in definierte Winkellagen bringbaren und zwischen diesen Winkellagen verdrehbaren Schaltwalze 100. Die Kulissenführungen 104 sind im gezeigten Ausführungsbeispiel durch am Umfang der als zylindrische Welle definierten Außendurchmessers ausgebildeten Schaltwalze 100 verlaufende Nutführungen 106 gebildet, die über ihren Umfangsverlauf an einigen Stellen Krümmungen 108 und an anderen Stellen Endanschläge 110 aufweisen können.

Die Krümmungen 108 der Nutführungen 106 sorgen für Verschiebe- und/oder Schwenkvorgänge der mit der Schaltwalze 100 geführten Schaltelemente (hier nicht dargestellt), sobald die Schaltwalze 100 verdreht wird. Die Endanschläge 110 könnten prinzipiell für eine Wegbegrenzung der Schaltelemente sorgen, was dazu betragen könnte, dass diese in der jeweils gewählten Winkellage der Schaltwalze 100 blockiert sind und bspw. die angewählte Übersetzungsstufe im Eingriff halten und auch unter auftretender Last am Herausspringen hindern.

In der Praxis ist es jedoch zu bevorzugen, dass die in Fig. 1 als Endanschläge 110 gezeichneten Wegbegrenzungen keine Relevanz bekommen, da es günstiger ist, die Winkelposition der Schaltwalze 100 in zyklischen Abständen oder auch permanent abzufragen und dadurch vermeiden zu können, dass sich die Schaltwalze 100 ungewollt verdreht, etwa durch fahrdynamische Einflüsse, durch Erschütterungen beim Überfahren von Bodenunebenheiten etc. Wird eine solche unerwünschte Verdrehung der Schaltwalze 100 festgestellt, ohne dass ein Gangwechsel geplant ist oder stattfinden soll, kann eine unverzügliche Korrektur oder ein Entgegenwirken gegen eine solche Verdrehung erfolgen, indem der Direktantrieb 102 oder Antriebsmotor 112 einen entsprechenden Stellbefehl und/oder einen entsprechenden Steuerstrom erhält, so dass er ein ausreichend großes Gegenmoment auf die Schaltwalze 100 ausüben kann.

Wie es die Fig. 1 schematisch andeutet, verfügt die verdrehbare Schaltwalze 100 über den gezeigten elektromotorischen Direktantrieb 102, mit dessen Hilfe die Schaltwalze 100 in sehr exakter Weise um definierte Drehwinkel gedreht und solchermaßen in die jeweiligen definierten Winkellagen gebracht werden kann. Gemäß der hier vorliegenden Erfindung ist der elektromotorische Direktantrieb 102 der Schaltwalze 100 durch einen bürstenlosen Gleichstrommotor 112 gebildet, der direkt mit der Schaltwalze 100 gekoppelt ist, d.h. ohne Zwischenschaltung eines Getriebes oder einer Umlenkung o. dgl.

Ein solcher Antriebsmotor 102, der aufgrund seines spezifischen Einsatzzweckes der Gattung der sog. Langsamläufer zuzuordnen ist, kann auch als Torquemotor bezeichnet werden. Solche Torquemotoren weisen bei vergleichsweise geringem Drehzahlniveau relativ hohe Drehmomente auf, wie sie für den vorliegenden Einsatzzweck auch benötigt werden, denn der Antriebsmotor 102 wirkt über die direkte Koppelung mit der Schaltwalze 100 unmittelbar auf die zu bewegenden Schaltelemente, die wiederum mit den ggf. unter Last stehenden Zahnradpaarungen des Wechselgetriebes zusammenwirken und diese auf den Getriebewellen verschieben müssen.

Auch wenn in der Fig. 1 eine Rahmenanordnung zur Lagerung der Schaltwalze 100 und zur Befestigung des direkt mit dieser gekoppelten Antriebsmotors 102 erkennbar ist, so ist diese Rahmenkonstruktion nicht zwingend als konkrete Einbausituation in einem Wechselgetriebe zu verstehen. Allerdings kann eine sinnvolle Ausführungsvariante des erfindungsgemäßen Wechselgetriebes vorsehen, dass der mit der Schaltwalze 100 direkt gekoppelte und in fester Drehverbindung stehende elektromotorische Direktantrieb 102 modular steckbar und/oder schnellwechselbar und/oder werkzeuglos austauschbar ist, was entweder für die leichte Austauschbarkeit gegen unterschiedlich dimensionierte Antriebsmotoren 112 bei verschiedenen Getriebebaugrößen und/oder für die leichte Zugänglichkeit zu Wartungszwecken von Vorteil sein kann.

Solche bürstenlosen Gleichstrommotoren 112 als Drehantriebe für Schaltwalzen 100 von Wechselgetrieben ermöglichen eine hohe Leistungsdichte und damit eine besonders kompakte Bauform, so dass auf jegliche Getriebeübersetzungsstufen zwischen der Schaltwalze 100 und dem Antriebsmotor 112 verzichtet werden kann. Außerdem bietet ein solch kompakter Motor 112 hoher Leistungsdichte vielfältige Vorteile hinsichtlich des Packaging, denn es besteht ein hoher Grad an Variabilität beim Einbau des Motors 112, der problemlos innerhalb des Getriebegehäuses untergebracht werden kann, so dass eine Wellendurchführung für den Antrieb der Schaltwalze 100 durch das Getriebegehäuse nach außen entfallen kann.

Die schematischen Ansichten der Figuren 2A bis 2D zeigen eine Ausführungsvariante eines sehr kompakten elektromotorischen Direktantriebes 102 mit einem bürstenlosen Gleichstrommotor 112, wie er als Schaltwalzenantrieb gemäß Fig. 1 für ein Zahnradwechselgetriebe, bspw. für Fahrzeugantriebe, vorteilhaft eingesetzt werden kann. Hierbei zeigt die Fig. 2A eine schematische Frontansicht auf einen Lagerflansch 8 und die durch diesen hindurchgeführte Abtriebswelle 3 des Schaltwalzenantriebes. Die Fig. 2B zeigt eine schematische Seitenansicht des Schaltwalzenantriebes gemäß Fig. 2A, während die Fig. 2C eine schematische Perspektivansicht des Schaltwalzenantriebes von schräg vorne gemäß Fig. 2A und Fig. 2B zeigt. Die Fig. 2D zeigt schließlich eine schematische Perspektivansicht des Schaltwalzenantriebes von schräg hinten gemäß Fig. 2A, Fig. 2B und Fig. 2C.

Die Abtriebswelle 3 weist eine Außenverzahnung 3a auf, so dass ein in Fig. 1 nicht erkennbarer stirnseitiger Abschnitt der Schaltwalze 100 mit größerem Durchmesser als die Abtriebswelle 3 und mit korrespondierender Innenverzahnung die gewünschte drehfeste Verbindung herstellen kann, sobald der Antriebsmotor 112 mittels der drei Befestigungsaugen außen am schildartigen Lagerflansch 8 an seinem vorgesehenen Montageort befestigt wird.

Wie es die Figuren 2A und 2D deutlich erkennen lassen, ist die Außenverzahnung 3a der kurzen Abtriebswelle 3 zumindest im hier gezeigten Ausführungsbeispiel an mindestens einer Stelle in einer Weise modifiziert, dass dort eine Zahnlücke zwischen zwei benachbarten Zähnen fehlt. Der auf diese Weise gebildete Doppelzahn 3b greift in eine entsprechende Passung der Innenverzahnung der Schaltwalze (hier nicht gezeigt) ein, die dort eine mit dem Doppelzahn 3b der Abtriebswelle 3 korrespondierende Verzahnungslücke aufweisen muss. Da der Doppelzahn 3b außerdem um einige Millimeter länger in Richtung zur Stirnseite der Abtriebswelle 3 gezogen sein kann, was in der perspektivischen Darstellung der Fig. 2D erkennbar ist, kann die Montage des Direktantriebes 102 an seinem vorgesehenen Einbauort und die Verbindung der Außenverzahnung 3a seiner Abtriebswelle mit der korrespondierenden Innenverzahnung der Schaltwalze wesentlich erleichtert werden.

Je nach Einbausituation kann der Lagerflansch 8 auch eine völlig andere Gestaltung aufweisen; zudem kann der Lagerflansch 8 bedarfsweise gegen einen anderen Lagerflansch 8 ausgetauscht werden, da der Antriebsmotor 112 mittels insgesamt acht gleichmäßig und konzentrisch um eine Zentrierhülse 10 herum angeordnete Schraubverbindungen 24 lösbar mit dem Lagerflansch 8 verschraubt ist.

Der Lagerflansch 8 weist eine zentrale Durchführung auf, durch die die Zentrierhülse 10 des Antriebsmotors 112 hindurchgeführt ist, was etwa in der Frontansicht der Fig. 2A, in der Seitenansicht der Fig. 2B sowie in der Perspektivansicht von schräg vorne der Fig. 2C deutlich erkennbar ist. Die Schraubverbindungen 24 sind randseitig der zentralen Durchführung des Lagerflanschs 8 und konzentrisch um diese zentrale Durchführung herum angeordnet.

Die zylindrisch geformte Zentrierhülse 10, die koaxial zur Abtriebswelle 3 des Antriebsmotors 112 angeordnet ist, dient der exakten Festlegung des Antriebsmotors 112, sobald dieser im Wechselgetriebe eingebaut wird. An der zylindrischen Außenmantelfläche der Zentrierhülse 10 befindet sich ein O-Ring 36 (vgl. Fig. 2B), der dafür sorgt, dass der Antriebsmotor 112 im eingebauten Zustand ein Gehäuse nach außen abdichten kann, bspw. ein Getriebegehäuse, wenn etwa das Motorgehäuse 1 des Antriebsmotors 112 teilweise oder vollständig aus diesem Getriebegehäuse (hier nicht gezeigt) hinausragt.

Rückseitig am Motorgehäuse 1 befindet sich ein flacher und in seiner Kontur mit der entsprechenden Kontur des Motorgehäuses 1 korrespondierender Elektronikdeckel 2, der mit mehreren Verschraubungen 22 lösbar am Motorgehäuse 1 befestigt ist und auf diese Weise eine rückseitige Abdeckung des Motorgehäuses 1 bildet (vgl. Fig. 2B und Fig. 2D).

Ein optionales LED-Fenster 20 im Elektronikdeckel 2 kann eine optische Funktionsanzeige bieten (vgl. Fig. 2D).

Ein zentraler Steckanschluss 43 befindet sich seitlich am Motorgehäuse 1 (vgl. Fig. 2C) und dient der elektrischen Verbindung von Versorgungs- und Steuerungsleitungen sowie ggf. dem Anschluss von Signalleitungen, wenn bspw. der Antriebsmotor 112 mit Sensoren ausgestattet ist, deren Signale mittels des Steckanschlusses 43 abgegriffen werden können. Wahlweise könnte am Motorgehäuse 1 anstelle des gezeigten Steckanschlusses 43 auch ein sog Pigtail-Anschluss angeordnet sein, der ggf. Platzvorteile bieten kann, was deshalb in beengten Einbausituationen eine sinnvolle Modifikation des elektrischen Versorgungs-Steckanschlusses sein kann.

Die Fig. 2E zeigt zudem einen schematischen Längsschnitt durch den Schaltwalzenantrieb entlang der Schnittlinie A-A der Fig. 2A. Dort finden sich zahlreiche weitere Einzelheiten, die nachfolgend in knapper Form genannt und bedarfsweise erläutert werden. Die drehfest mit der zentralen Magnetwelle 4 verschraubte Abtriebswelle 3 dient über ihre Außenverzahnung 3a der Koppelung mit der Schaltwelle 100 (Fig. 1), die eine mit der Außenverzahnung 3a der Abtriebswelle 3 korrespondierende Innenverzahnung aufweist. Die zentrale Magnetwelle 4 dient gleichzeitig der Lagerung des Rotors, der mit seinem Rückschlussring 14 die Permanentmagnete des Motors in Gestalt eines rotierenden Käfigs trägt.

Die Fig. 2E zeigt weiterhin ein etwa in Höhe des Lagerschilds 8 befindliches und die Abtriebswelle 3 lagerndes Rillenkugellager 30 sowie einen die Abtriebswelle 3 abdichtenden Wellendichtring 31. Eine stirnseitig in einem hohlzylindrischen Sackloch der Abtriebswelle 3 befindliche Zylinderschraube 25 stellt eine lösbare Schraubverbindung zwischen der Abtriebswelle 3 mit ihrer Außenverzahnung und der Magnetwelle 4 her. Diese weist an einem der Schraubverbindung mit der Zylinderschraube 25 gegenüberliegenden stirnseitigen Ende einen Magneten 40 auf, der sensorischen Zwecken dienen kann.

Ein innerer O-Ring 35 zwischen der außenliegenden Zentrierhülse 10 (vgl. Fig. 2B) und dem die Zentrierhülse 10 an deren Innenseite abstützenden Hülsenabschnitt des Lagerflanschs 8 dient der Abdichtung der aufeinander geschobenen Bauteile. Ein weiterer O-Ring 33 dichtet den Lagerflansch 8 rückseitig zum Motorgehäuse 1 ab, das über einen entsprechend geformten Hülsenabschnitt des Lagerflanschs 8 geschoben ist.

Die in den insgesamt drei äußeren Befestigungsaugen des Lagerflanschs 8 eingefügten elastischen Dämpferhülsen 37 und 38 dienen der vibrationsdämpfenden Befestigung des Lagerflanschs 8 am vorgesehenen Montageort des Antriebsmotors 112.

An der rechten Seite des Motorgehäuses 1 ist nochmals der zentrale Steckanschluss 43 erkennbar, der mittels wenigstens einer Linsenschraube 26 an einer entsprechenden Befestigungsfläche des Motorgehäuses 1 verschraubt ist.

Die Bezugsziffern 16 bezeichnet eine Zentrierhülse, die Bezugsziffer 17 eine Spannscheibe am rückseitigen Deckel 2 des Antriebsmotors 1, während die Bezugsziffer 34 eine O-Ring-Dichtung in diesem Bereich bezeichnet.

Die Bezugsziffern 28 und 29 bezeichnen jeweils Rillenkugellager, die der Lagerung der Magnetwelle 4 innerhalb einer Hülse der Statorwelle 5 und koaxial zu dieser dienen. Die Statorwelle 5 trägt die innerhalb des die Permanentmagneten tragenden Rückschlussrings 14 und koaxial zu diesem angeordneten Spulen, die in den Figuren 3A, 3B und 3C noch deutlicher erkennbar sind. Eine Wellenmutter 9 legt die Magnetwelle 4 in axialer Richtung fest.

Nahe des rückseitigen Elektronikdeckels 2 befinden sich zahlreiche weitere Komponenten, wovon die meisten im Zusammenhang mit der Steuerungselektronik des Antriebsmotors 112 stehen. Die Bezugsziffer 15 bezeichnet eine Leiterplatte, die hier nicht gezeigte elektronische Bauteile tragen kann, die Bezugsziffer 18 eine Lagerscheibe aus Kunststoff und die Bezugsziffer 19 ein Lager aus Kunststoff. Sowohl die in Fig. 2E erkennbare Zentrierhülse 16 als auch die Spannscheibe 17, dazu die Lagerscheibe 18 aus Kunststoff als auch das Lager 19 aus Kunststoff dienen allesamt als Lagerung und als wirksamer Vibrationsschutz für die empfindliche Leiterplatte 15.

Die Bezugsziffern 11 und 12 bezeichnen jeweils Gewindehülsen, die Bezugsziffern 21, 22 und 23 jeweils Zylinderschrauben. Die Bezugsziffer 6 bezeichnet eine Einlötbuchse, während die Bezugsziffer 7 einen Buchsenhalter bezeichnet.

Die Fig. 3A zeigt eine schematische Perspektivansicht von Motorkomponenten des ohne umschließendes Motorgehäuse 1 dargestellten Schaltwalzenantriebes 102. Die Fig. 3B zeigt eine schematische Seitenansicht der Motorkomponenten des Schaltwalzenantriebes 102 gemäß Fig. 3A. Die schematische Längsschnittansicht der Fig. 3C zeigt einzelne Motorkomponenten des Schaltwalzenantriebs 102 gemäß Fig. 3A und Fig. 3B, wobei hier dieselben Bezugsziffern wie in der Fig. 2E verwendet werden, die auch jeweils dieselben Komponenten bezeichnen, so dass an dieser Stelle auf eine gesonderte Beschreibung verzichtet werden kann.

Die schematischen Darstellungen der Figuren 3A und 3B verdeutlichen im Wesentlichen die Anordnung und den Aufbau der Statorwelle 5 mit ihren Spulen, die koaxial vom antreibbaren und solchermaßen rotierenden Rückschlussring 14 der Magnetwelle 4 mit den im Rückschlussring 14 verankerten Permanentmagneten umschlossen werden (vgl. Fig. 2E).

Die Figuren 3A bis 3C lassen weiterhin die Zentrierhülse 10 mit dem außen daran angeordneten O-Ring 36 erkennen, zudem die Kunststoffplatte 15, die sich unterhalb des Elektronikdeckels 2 befindet, wenn dieser mit den Zylinderschrauben 22 am Motorgehäuse 1 verschraubt ist.

Die Erfindung wurde unter Bezugnahme auf eine bevorzugte Ausführungsform beschrieben. Es ist jedoch für einen Fachmann vorstellbar, dass Abwandlungen oder Änderungen der Erfindung gemacht werden können, ohne dabei den Schutzbereich der nachstehenden Ansprüche zu verlassen.

### Bezugszeichenliste

- 1: Motorgehäuse
- 2: Elektronikdeckel, Gehäusedeckel
- 3: Welle, Abtriebswelle
- 3a: Außenverzahnung (Abtriebswelle)
- 3b: Doppelzahn (Außenverzahnung)
- 4: Magnetwelle
- 5: Statorwelle
- 6: Einlötbuchse
- 7: Buchsenhalter
- 8: Lagerflansch
- 9: Wellenmutter
- 10: Zentrierhülse
- 11: Gewindehülse
- 12: Gewindehülse
- 14: Rückschlussring
- 15: Leiterplatte
- 16: Zentrierhülse
- 17: Spannscheibe
- 18: Lagerscheibe (Kunststoff)
- 19: Lager (Kunststoff)
- 20: LED-Fenster
- 21: Verschraubung, Zylinderschraube
- 22: Verschraubung, Zylinderschraube
- 23: Verschraubung, Zylinderschraube
- 24: Schraubverbindung, Zylinderschraube
- 25: Befestigungsschraube, Zylinderschraube
- 26: Befestigungsschraube, Linsenschraube
- 28: Rillenkugellager
- 29: Rillenkugellager
- 30: Rillenkugellager
- 31: Wellendichtring
- 33: O-Ring, weiterer O-Ring
- 33: O-Ring, O-Ring-Dichtung
- 35: O-Ring, innerer O-Ring
- 36: O-Ring, O-Ring-Dichtung
- 37: Dämpferhülse, elastische Dämpferhülse
- 38: Dämpferhülse, elastische Dämpferhülse
- 40: Magnet, Sensormagnet
- 43: Steckanschluss, zentraler Steckanschluss
- 100: Schaltwalze
- 102: Direktantrieb, elektromotorischer Direktantrieb
- 104: Kulissenführung
- 106: Nutführung
- 108: Krümmung
- 110: Endanschlag
- 112: Antriebsmotor, Gleichstrommotor, bürstenloser Gleichstrommotor

## Patentansprüche

1. Drehmoment- und/oder drehzahlwandelndes Wechselgetriebe mit einer Eingangswelle und einer Ausgangswelle sowie mindestens zwei Übersetzungsstufen, denen jeweils wenigstens eine wechselbare Zahnradpaarung zugeordnet ist,
- wobei Schaltelemente auf Schiebemuffen wirken, die mit den Zahnradpaarungen in Verbindung stehen und diese wechseln können,
- wobei die Schaltelemente in Eingriff mit einer in definierte Winkellagen bringbaren und zwischen diesen Winkellagen verdrehbaren Schaltwalze (100) stehen,
- wobei die Schaltwalze (100) über einen elektromotorischen Direktantrieb (102) verfügt, der dazu ausgestattet ist, die Schaltwalze (100) zu drehen und in die jeweiligen definierten Winkellagen zu bringen,
- und wobei der elektromotorische Direktantrieb (102) der Schaltwalze (100) durch einen bürstenlosen Gleichstrommotor (112) gebildet ist,
**dadurch gekennzeichnet, dass**
- der elektromotorische Direktantrieb (102) ein als Außenläufer-Motor gebildeter Torquemotor ist,
- eine Abtriebswelle (3) des elektromotorischen Direktantriebs (102) eine Außenverzahnung (3a) aufweist,
- ein stirnseitiger Abschnitt der Schaltwalze (100) mit größerem Durchmesser als die Abtriebswelle (3) eine mit der Außenverzahnung (3a) des elektromotorischen Direktantriebs (102) korrespondierende Innenverzahnung aufweist und dass
- die Abtriebswelle (3) mit der Außenverzahnung (3a) und die Schaltwalze (100) mit der korrespondierenden Innenverzahnung an ihrem stirnseitigen Abschnitt drehfest miteinander verbunden sind,
- wobei der elektromotorische Direktantrieb (102) mit der Schaltwalze (100) direkt, ohne Zwischenschaltung eines Getriebes oder einer Umlenkung gekoppelt ist und
- wobei die Außenverzahnung (3a) der Abtriebswelle (3) an mindestens einer Stelle in einer Weise modifiziert ist, dass dort eine Zahnlücke zwischen zwei benachbarten Zähnen fehlt, wobei der auf diese Weise gebildete Doppelzahn (3b) in eine korrespondierende Verzahnungslücke an der Innenverzahnung der Schaltwalze eingreift.

2. Wechselgetriebe nach Anspruch 1, dessen elektromotorischer Direktantrieb (102) der Schaltwalze (100) durch einen Außenläufer-Motor mit weniger Nuten als Polen gebildet ist.

3. Wechselgetriebe nach einem der Ansprüche 1 bis 2, dessen elektromotorischer Direktantrieb (102) der Schaltwalze (100) jeweils Leerlaufstellungen zwischen zwei benachbarten Schaltstufen vorsieht.

4. Wechselgetriebe nach einem der Ansprüche 1 bis 3, dessen elektromotorischer Direktantrieb (102) der Schaltwalze (100) elektronisch gesteuert ist.

5. Wechselgetriebe nach einem der Ansprüche 1 bis 4, dessen elektronischer Direktantrieb (102) über ein Motorgehäuse (1) verfügt.

6. Wechselgetriebe nach Anspruch 5, wobei die Rückseite des Motorgehäuses (1) als Elektronikdeckel (2) ausgebildet ist.

7. Wechselgetriebe nach Anspruch 6, wobei der Elektronikdeckel (2) ein LED-Fenster (20) aufweist, das eine optische Funktionsanzeige bietet.

8. Wechselgetriebe nach einem der Ansprüche 5 bis 7, wobei seitlich am Motorgehäuse (1) ein zentraler Steckanschluss (43) zur elektrischen Verbindung von Versorgungs- und Steuerungsleitungen angeordnet ist.

9. Wechselgetriebe nach Anspruch 8, wobei der zentrale Steckanschluss (43) zum Anschluss von Signalleitungen vorgesehen ist.

10. Verfahren zum Wechseln zwischen mindestens zwei Übersetzungsstufen eines drehmoment- und/oder drehzahlwandelnden Wechselgetriebes, das über eine Eingangswelle und eine Ausgangswelle sowie mindestens zwei Übersetzungsstufen verfügt, denen jeweils wenigstens eine wechselbare Zahnradpaarung zugeordnet ist,
- wobei Schaltelemente auf Schiebemuffen wirken, die mit den Zahnradpaarungen in Verbindung stehen und diese wechseln können,
- wobei die Schaltelemente in Eingriff mit einer zwischen definierten Winkellagen verdrehbaren Schaltwalze (100) stehen,
- wobei die Schaltwalze (100) über einen, durch einen bürstenlosen Gleichstrommotor (112) gebildeten elektromotorischen Direktantrieb (102) verfügt,
**dadurch gekennzeichnet, dass**
- der elektromotorische Direktantrieb (102) ein als Außenläufer-Motor gebildeter Torquemotor ist,
- eine Abtriebswelle (3) des elektromotorischen Direktantriebs (102) eine Außenverzahnung (3a) aufweist,
- ein stirnseitiger Abschnitt der Schaltwalze (100) mit größerem Durchmesser als die Abtriebswelle (3) eine mit der Außenverzahnung (3a) des elektromotorischen Direktantriebs (102) korrespondierende Innenverzahnung aufweist und
- dass die Abtriebswelle (3) mit der Außenverzahnung (3a) und die Schaltwalze (100) mit der korrespondierenden Innenverzahnung an ihrem stirnseitigen Abschnitt drehfest miteinander verbunden sind,
- wobei der elektromotorische Direktantrieb (102) mit der Schaltwalze (100) direkt, ohne Zwischenschaltung eines Getriebes oder einer Umlenkung gekoppelt ist
- wobei die Außenverzahnung (3a) der Abtriebswelle (3) an mindestens einer Stelle in einer Weise modifiziert ist, dass dort eine Zahnlücke zwischen zwei benachbarten Zähnen fehlt, wobei der auf diese Weise gebildete Doppelzahn (3b) in eine korrespondierende Verzahnungslücke an der Innenverzahnung der Schaltwalze eingreift
- wobei der elektromotorische Direktantrieb (102) elektronisch angesteuert wird, um die Schaltwalze (100) zum Zwecke des Wechsels zwischen den wenigstens zwei Übersetzungsstufen zu drehen und in die jeweiligen definierten Winkellagen zu bringen.

11. Verfahren nach Anspruch 10, bei dem der elektromotorische Direktantrieb (102) der Schaltwalze (100) zwischen zwei benachbarten Schaltstufen jeweils in Leerlaufstellungen gebracht werden kann.

## Claims

1. A torque-converting and/or speed-converting variable-speed transmission, with an input shaft and an output shaft and at least two gear ratios, each of which is assigned at least one changeable gear pair,
- wherein shifting elements act on sliding sleeves that are connected to the gear pairs and are able to change these gear pairs,
- wherein the shifting elements are in engagement with a shift drum (100), which is bringable into defined angular positions and rotatable between these angular positions,
- wherein the shift drum (100) has an electric-motor direct drive (102), which is equipped to rotate the shift drum (100) and bring it into the particular defined angular positions,
- and wherein the electric-motor direct drive (102) of the shift drum (100) is formed by a brushless DC motor (112),
**characterised in that**
- the electric-motor direct drive (102) is a torque motor formed as external rotor motor,
- a driven shaft (3) of the electric-motor direct drive (102) has an external toothing (3a),
- a front-face section of the shift drum (100) with a greater diameter than the driven shaft (3) has an internal toothing corresponding to the external toothing (3a) of the electric-motor direct drive (102), and **in that**
- the driven shaft (3) with the external toothing (3a) and the shift drum (100) with the corresponding internal toothing are non-rotatingly connected to each other at the front-face section of the shift drum (100),
- wherein the electric-motor direct drive (102) is coupled directly with the shift drum (100) without the interposition of a transmission or a deflection, and
- wherein the external toothing (3a) of the driven shaft (3) is modified at at least one point in such a manner that a tooth gap between two adjacent teeth is missing there, wherein the double tooth (3b) formed in this way engages with a corresponding tooth gap at the internal toothing of the shift drum.

2. The variable-speed transmission of claim 1, of which the electric-motor direct drive (102) of the shift drum (100) is formed by an external rotor motor with fewer slots than poles.

3. The variable-speed transmission of one of the claims 1 to 2, of which the electric-motor direct drive (102) of the shift drum (100) provides neutral gear positions between each two adjacent shift stages.

4. The variable-speed transmission of one of the claims 1 to 3, of which the electric-motor direct drive (102) of the shift drum (100) is electronically controlled.

5. The variable-speed transmission of one of the claims 1 to 4, of which the electronic direct drive (102) has a motor housing (1).

6. The variable-speed transmission of claim 5, wherein the back side of the motor housing (1) is designed as electronics cover (2).

7. The variable-speed transmission of claim 6, wherein the electronics cover (2) has an LED window (20) offering a visual function display.

8. The variable-speed transmission of one of the claims 5 to 7, wherein a central plug connection (43) is arranged on the side of the motor housing (1) for the electrical connection of supply and control lines.

9. The variable-speed transmission of claim 8, wherein the central plug connection (43) is provided for the connection of signal lines.

10. A method for changing between at least two gear ratios of a torque-converting and/or speed-converting variable-speed transmission, which has an input shaft and an output shaft and at least two gear ratios, each of which is assigned at least one changeable gear pair,
- wherein shifting elements act on sliding sleeves that are connected to the gear pairs and are able to change these gear pairs,
- wherein the shifting elements are in engagement with a shift drum (100), which is bringable into defined angular positions and rotatable between these angular positions,
- wherein the shift drum (100) has an electric-motor direct drive (102) that is formed by a brushless DC motor (112),
**characterised in that**
- the electric-motor direct drive (102) is a torque motor formed as external rotor motor,
- a driven shaft (3) of the electric-motor direct drive (102) has an external toothing (3a),
- a front-face section of the shift drum (100) with a greater diameter than the driven shaft (3) has an internal toothing corresponding to the external toothing (3a) of the electric-motor direct drive (102), and **in that**
- the driven shaft (3) with the external toothing (3a) and the shift drum (100) with the corresponding internal toothing are non-rotatingly connected to each other at the front-face section of the shift drum (100),
- wherein the electric-motor direct drive (102) is coupled directly with the shift drum (100) without the interposition of a transmission or a deflection,
- wherein the external toothing (3a) of the driven shaft (3) is modified at at least one point in such a manner that a tooth gap between two adjacent teeth is missing there, wherein the double tooth (3b) formed in this way engages with a corresponding tooth gap at the internal toothing of the shift drum,
- wherein the electric-motor direct drive (102) is electronically controlled to rotate the shift drum (100) for the purpose of changing between the at least two gear ratios and to bring the shift drum into the particular defined angular positions.

11. The method according to claim 10, in which the electric-motor direct drive (102) of the shift drum (100) can be brought into neutral gear positions between each two adjacent shift stages.

## Revendications

1. Mécanisme de changement de vitesse à conversion de couple et/ou de vitesse, comprenant un arbre d'entrée et un arbre de sortie ainsi qu'au moins deux étages de transmission, à chacune étant associée au moins une paire d'engrenages changeables,
- dans lequel les éléments de changement de vitesse agissent sur des manchons coulissants qui sont en communication avec les paires d'engrenages et peuvent changer celles-ci,
- dans lequel les éléments de changement de vitesse sont en prise avec un tambour de changement de vitesse (100) qui peut être amené dans des positions angulaires définies et être tourné entre ces positions angulaires,
- dans lequel le tambour de changement de vitesse (100) dispose d'un entraînement direct électromoteur (102) qui est équipé pour faire tourner le tambour de changement de vitesse (100) et pour amener celui-ci dans les positions angulaires définies respectives,
- et dans lequel ledit entraînement direct électromoteur (102) du tambour de changement de vitesse (100) est formé par un moteur à courant continu sans balais (112),
**caractérisé par le fait que**
- l'entraînement direct électromoteur (102) est un moteur couple réalisé en tant que moteur à rotor externe,
- un arbre de sortie (3) de l'entraînement direct électromoteur (102) présente une denture extérieure (3a),
- une section face frontale du tambour de changement de vitesse (100) ayant un diamètre supérieur à celui de l'arbre de sortie (3) présente une denture intérieure correspondant à la denture extérieure (3a) de l'entraînement direct électromoteur (102) et que
- l'arbre de sortie (3) avec la denture extérieure (3a) et le tambour de changement de vitesse (100) avec la denture intérieure correspondante sur sa section face frontale sont reliés entre eux de manière solidaire en rotation ,
- dans lequel l'entraînement direct électromoteur (102) est couplé directement au tambour de changement de vitesse (100), sans intercaler un engrenage ou une déviation et
- dans lequel la denture extérieure (3a) de l'arbre de sortie (3) est modifiée sur au moins un point de telle sorte qu'il n'y ait pas d'espace entre deux dents adjacentes, dans lequel la dent double (3b) ainsi formée s'engage dans un espace de denture correspondant sur la denture intérieure du tambour de changement de vitesse.

2. Mécanisme de changement de vitesse selon la revendication 1, dont l'entraînement direct électromoteur (102) du tambour de changement de vitesse (100) est formé par un moteur à rotor externe comprenant moins de rainures que de pôles.

3. Mécanisme de changement de vitesse selon l'une quelconque des revendications 1 à 2, dont l'entraînement direct électromoteur (102) du tambour de changement de vitesse (100) prévoit respectivement des positions de ralenti entre deux étages de changement de vitesse adjacents.

4. Mécanisme de changement de vitesse selon l'une quelconque des revendications 1 à 3, dont l'entraînement direct électromoteur (102) du tambour de changement de vitesse (100) est commandé de façon électronique.

5. Mécanisme de changement de vitesse selon l'une quelconque des revendications 1 à 4, dont l'entraînement direct électronique (102) dispose d'un carter moteur (1).

6. Mécanisme de changement de vitesse selon la revendication 5, dans lequel la face arrière du carter moteur (1) est conçu en tant que couvercle électronique (2).

7. Mécanisme de changement de vitesse selon la revendication 6, dans lequel le couvercle électronique (2) comprend une fenêtre à DEL (20) qui offre un affichage optique des fonctions.

8. Mécanisme de changement de vitesse selon l'une quelconque des revendications 5 à 7, dans lequel un connecteur central (43) pour connecter électriquement des lignes d'alimentation et de commande est disposé sur le côté du carter moteur (1).

9. Mécanisme de changement de vitesse selon la revendication 8, dans lequel le connecteur central (43) est prévu pour connecter des lignes de signaux.

10. Procédé de changement entre au moins deux étages de transmission d'un mécanisme de changement de vitesse à conversion de couple et/ou de vitesse qui comprend un arbre d'entrée et un arbre de sortie ainsi qu'au moins deux étages de transmission, à chacune étant associée au moins une paire d'engrenages changeables,
- dans lequel les éléments de changement de vitesse agissent sur des manchons coulissants qui sont en communication avec les paires d'engrenages et peuvent changer celles-ci,
- dans lequel les éléments de changement de vitesse sont en prise avec un tambour de changement de vitesse (100) qui peut être tourné entre des positions angulaires définies,
- dans lequel le tambour de changement de vitesse (100) dispose d'un entraînement direct électromoteur (102) qui est formé par un moteur à courant continu sans balais (112),
**caractérisé par le fait que**
- l'entraînement direct électromoteur (102) est un moteur couple réalisé en tant que moteur à rotor externe,
- un arbre de sortie (3) de l'entraînement direct électromoteur (102) présente une denture extérieure (3a),
- une section face frontale du tambour de changement de vitesse (100) ayant un diamètre supérieur à celui de l'arbre de sortie (3) présente une denture intérieure correspondant à la denture extérieure (3a) de l'entraînement direct électromoteur (102) et
- que l'arbre de sortie (3) avec la denture extérieure (3a) et le tambour de changement de vitesse (100) avec la denture intérieure correspondante sur sa section face frontale sont reliés entre eux de manière solidaire en rotation,
- dans lequel l'entraînement direct électromoteur (102) est couplé directement au tambour de changement de vitesse (100), sans intercaler un engrenage ou une déviation,
- dans lequel la denture extérieure (3a) de l'arbre de sortie (3) est modifiée sur au moins un point de telle sorte qu'il n'y ait pas d'espace entre deux dents adjacentes, dans lequel la dent double (3b) ainsi formée s'engage dans un espace de denture correspondant sur la denture intérieure du tambour de changement de vitesse,
- dans lequel l'entraînement direct électromoteur (102) est commandé de façon électronique afin de faire tourner le tambour de changement de vitesse (100) dans le but de changer entre lesdits au moins deux étages de changement de vitesse et d'amener celui-ci dans les positions angulaires définies respectives.

11. Procédé selon la revendication 10, dans lequel l'entraînement direct électromoteur (102) du tambour de changement de vitesse (100) peut être amené respectivement dans des positions de ralenti entre deux étages de changement de vitesse adjacents.
